# EUROPEAN PATENT SPECIFICATION

(11) **EP 3 233 363 B1**
(45) Date of publication and mention of the grant of the patent: **07.10.2020**
(21) Application number: 15825849.1
(22) Date of filing: 17.12.2015
(51) Int. Cl.: B23K 26/38, B23K 26/035

(54) **CUTTING SYSTEM**
SCHNEIDSYSTEM
SYSTÈME DE DÉCOUPE

(30) Priority: 18.12.2014 CN 201410791172
(43) Date of publication of application: 25.10.2017
(73) Proprietor: Tyco Electronics (Shanghai) Co. Ltd., Shanghai 200131 (CN); TE Connectivity Corporation, Berwyn, PA 19312 (US)
(72) Inventor: LIU, Yun, Shanghai (CN); XIN, Liming, Shanghai (CN); HU, Lvhai, Shanghai (CN); ZHANG, Dandan, Shanghai (CN); LU, Roberto Francisco-Yi, Berwyn, Pennsylvania 19312 (US)
(74) Representative: Grünecker Patent- und Rechtsanwälte PartG mbB
(86) International application number: PCT/IB2015/059732
(87) International publication number: WO 2016/098047

(56) References cited:
- EP-A2- 1 148 588
- WO-A1-03/051571
- DE-A1- 3 816 692
- NL-C2- 1 021 622

## Description

### BACKGROUND OF THE INVENTION

### Field of the Invention

Embodiments of the present invention relates to a cutting system, more particularly, relates to a laser cutting system adapted to cut a row of work pieces out of a sheet of material plate at a single cutting process.

### Description of the Related Art

In electronic manufacturing industry, it often needs to machine a plurality of work pieces, for example, contacts, on a material plate, for example, a strip of metal plate. Generally, in prior art, the plurality of work pieces are machined by punching or cutting the strip of metal plate with a conventional punching tool or a conventional cutting tool.

However, the machining method with the conventional punching tool or the conventional cutting tool has many disadvantages, such as, slow processing speed, low production efficiency, etc.. Furthermore, the work pieces machined by the conventional punching tool or the conventional cutting tool have rough edges, reducing the quality of the work piece.

From NL1021622 C2, forming the basis for the preamble of claim 1, a laser cutting device for sheet material is known which includes an input region, a processing region, an output region, a first fixing device for a first product, a second fixing device for a second product and a laser cutting head movable in a direction essentially transverse to the first path along which the first fixing device can be moved, wherein the second fixing device can be moved along a second path parallel to the first path, both of these paths extending through the input, processing and output regions.

EP1148588 A2 discloses a contact socket for which, as a result of the single-piece construction, the manufacturing process can be optimized.

It is an object of the invention to provide a solution that improves the fixation of the work piece during a laser cutting process, in particular for small pieces to be cut.

This objective is achieved by the cutting system according to claim 1.

### SUMMARY OF THE INVENTION

The present invention has been made to overcome or alleviate at least one aspect of the above mentioned disadvantages.

According to an object of the present invention, there is provided a cutting system capable of cutting a row of work pieces out of a sheet of material plate at a single cutting process and improving the cutting quality of edges of the work pieces.

According to the present invention, there is provided a cutting system, comprising: a moving mechanism; a laser cutter mounted on the moving mechanism; a support table configured to support a sheet of material plate to be cut thereon; and a fixation device configured to fix the sheet of material plate to be cut on the support table. The fixation device comprises a pressing plate having a row of tooth-like features with a tooth slot defined between adjacent tooth-like features. During cutting the sheet of material plate with the laser cutter, the row of tooth-like features press the sheet of material plate on the support table, and the moving mechanism drives a laser head of the laser cutter to move along edges of the tooth slots based on a preset control program so as to cut a row of work pieces, corresponding to the row of tooth-like features, out of the sheet of material plate by a single cutting process.

According to an exemplary embodiment of the present invention, wherein the sheet of material plate is a strip of metal plate.

According to another exemplary embodiment of the present invention, the row of tooth-like features are identical with each other in size and shape, so that the row of work pieces made of the sheet of material plate are identical with each other in size and shape.

According to another exemplary embodiment of the present invention, the row of tooth-like features are different from each other in size and shape, so that the row of work pieces made of the sheet of material plate are different from each other in size and shape.

According to another exemplary embodiment of the present invention, the fixation device further comprises a force exerting mechanism configured to exert a pressing force on the pressing plate, so as to press the sheet of material plate on the support table with the pressing plate.

According to another exemplary embodiment of the present invention, the force exerting mechanism comprising: a first linking plate fixed on a stationary base and having a first end and a second end; a second linking plate having a first corner, a second corner and a third corner, the first corner of which is pivotally connected to the first end of the first linking plate; a third linking plate having a first end and a second end, the first end of which is pivotally connected to the second end of the first linking plate; and a handle, one bottom side of which is pivotally connected to the second corner of the second linking plate, and the other bottom side of which is pivotally connected to the second end of the third linking plate, wherein the pressing plate is fixedly connected to the third corner of the second linking plate, and the pressing force is exerted to the pressing plate by rotating the handle.

According to another exemplary embodiment of the present invention, the force exerting mechanism is configured to be switched between a locking state where the sheet of material plate is pressed and an unlocking state where the sheet of material plate is released.

According to another exemplary embodiment of the present invention, when the force exerting mechanism is switched to the locking state, the second linking plate and the third linking plate of the force exerting mechanism are engaged with each other by friction, so as to keep the force exerting mechanism in the locking state.

According to another exemplary embodiment of the present invention, when the force exerting mechanism is switched to the locking state, the handle is rotated to and held at a horizontal position substantially parallel to the pressing plate.

According to another exemplary embodiment of the present invention, the pressing plate comprises a plate body with a connection rod provided thereon, the connection rod having a threaded end; a connection member is provided on the third corner of the second linking plate and formed with a through hole; and the threaded end of the connection rod passes through the through hole of the connection member and is locked on the connection member by two nuts on both sides of the connection member.

According to another exemplary embodiment of the present invention, the force exerting mechanism comprises an air cylinder or a hydraulic cylinder, a piston rod of the air cylinder or the hydraulic cylinder directly exerts the pressing force on the pressing plate.

According to another exemplary embodiment of the present invention, the support table comprises a body with a chamber formed therein; a row of material dropping slots, corresponding to the row of tooth slots of the pressing plate, are formed in the top wall of the chamber; and through the row of material dropping slots in the top wall of the chamber, waste material cut from the sheet of material plate falls into the chamber, and smoke and dust produced during cutting the sheet of material plate enters into the chamber.

According to another exemplary embodiment of the present invention, the cutting system further comprises a vacuum sucker with a vacuum suction pipe extending into the chamber from the side wall of the chamber, so as to sucking the smoke and dust out of the chamber.

According to another exemplary embodiment of the present invention, a row of material collecting slots, corresponding to the row of material dropping slots, are formed in the bottom wall of the chamber; and the waste material falling into the chamber through the material dropping slots is collected in the material collecting slots.

According to another exemplary embodiment of the present invention, the material collecting slot exhibits a trumpet shape with a larger opening facing the material dropping slot and a smaller opening opposite to the larger opening.

According to another exemplary embodiment of the present invention, the support table further comprises a bottom cover provided on the bottom of the body of the support table; and the waste material collected in the material collecting slots is discharged through the smaller openings of the material collecting slots after the bottom cover is opened.

According to another exemplary embodiment of the present invention, the moving mechanism comprises a multi-freedom robot, and the laser cutter is mounted on an end arm of the multi-freedom robot.

In the above various exemplary embodiments of the present invention, the sheet of material plate is pressed by the pressing plate with a row of tooth-like features, and the laser head cuts the sheet of material plate along edges of the tooth slots between the tooth-like features. As a result, a row of work pieces, corresponding to the row of tooth-like features, are cut out of the sheet of material plate by a single cutting process, increasing the cutting efficiency. Furthermore, the work pieces cut out by the laser head has a smooth edge, improving the cutting quality of the work piece.

### BRIEF DESCRIPTION OF THE DRAWINGS

The above and other features of the present invention will become more apparent by describing in detail exemplary embodiments thereof with reference to the accompanying drawings, in which:
Fig.1 is an illustrative perspective view of a cutting system according to an exemplary embodiment of the present invention, in which a fixation device is in a locking state where a sheet of material plate is pressed;
Fig.2 is an illustrative perspective view showing a support table and the fixation device of the cutting system of Fig.1, in which the fixation device is in an unlocking state where the sheet of material plate is released; and
Fig.3 is a cross section view of the support table and the fixation device of the cutting system of Fig.1, in which the fixation device is in the locking state where the sheet of material plate is pressed.

### DETAILED DESCRIPTION OF PREFERRED EMBODIMENTS OF THE IVENTION

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

According to a general concept of the present invention, there is provided a cutting system, comprising: a moving mechanism; a laser cutter mounted on the moving mechanism; a support table configured to support a sheet of material plate to be cut thereon; and a fixation device configured to fix the sheet of material plate to be cut on the support table. The fixation device comprises a pressing plate having a row of tooth-like features with a tooth slot defined between adjacent tooth-like features. During cutting the sheet of material plate with the laser cutter, the row of tooth-like features press the sheet of material plate on the support table, and the moving mechanism drives a laser head of the laser cutter to move along edges of the tooth slots, so as to cut a row of work pieces, corresponding to the row of tooth-like features, out of the sheet of material plate at a single cutting process.

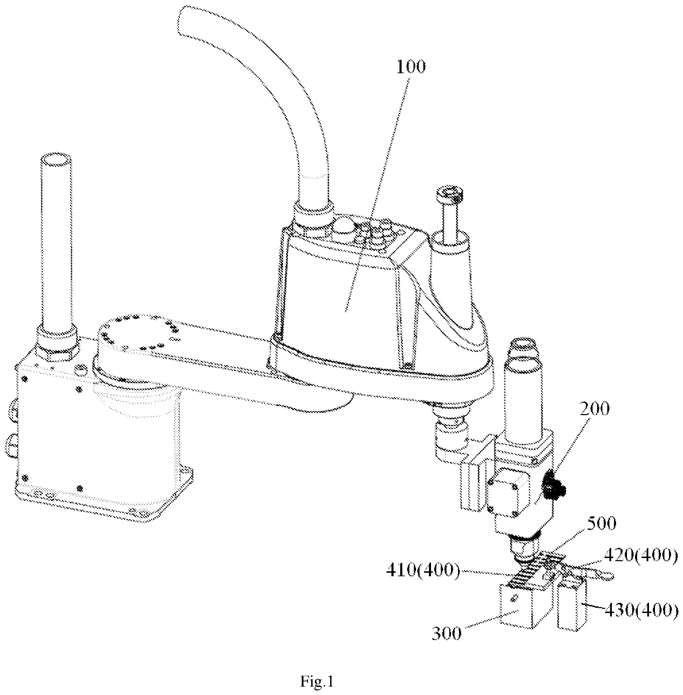

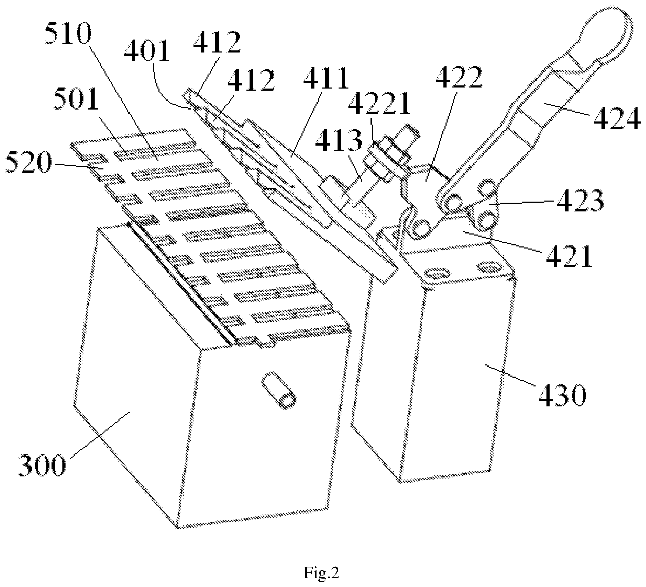

Fig.1 is an illustrative perspective view of a cutting system according to an exemplary embodiment of the present invention, in which a fixation device 400 is in a locking state where a sheet of material plate 500 is pressed; Fig.2 is an illustrative perspective view showing a support table 300 and the fixation device 400 of the cutting system of Fig.1, in which the fixation device 400 is in an unlocking state where the sheet of material plate 500 is released.

In an exemplary embodiment of the present invention, as shown in Figs.1 and 2, there is disclosed a cutting system mainly comprising a moving mechanism 100, a laser cutter 200, a support table 300 and a fixation device 400.

As shown in Figs.1 and 2, the laser cutter 200 is mounted on the moving mechanism 100. The moving mechanism 100 is constructed to drive a laser head of the laser cutter 200 to move along a predetermined trajectory based on a preset control program. During cutting the sheet of material plate 500, the laser cutter 200 emits a laser beam on the sheet of material plate 500, so as to cut the sheet of material plate 500 along the predetermined trajectory. The support table 300 is configured to support the sheet of material plate 500 to be cut thereon. The fixation device 400 is configured to fix the sheet of material plate 500 to be cut on the support table 300.

Referring to Figs.1 and 2 again, in an embodiment, the fixation device 400 comprises a pressing plate 410, on which a row of tooth-like features 412 are formed. As a result, a row of tooth slots 401 are defined among tooth-like features 412. During cutting the sheet of material plate 500 with the laser cutter 200, the row of tooth-like features 412 press the sheet of material plate 500 on the support table 300, and the moving mechanism 100 drives the laser head of the laser cutter 200 to move along edges of the tooth slots 401, so as to cut and form a row of work pieces 510, corresponding to the row of tooth-like features 412, out of the sheet of material plate 500 by a single cutting process.

In an exemplary embodiment of the present invention, the sheet of material plate 500 may be a strip of metal plate. The work pieces 510 made of the strip of metal plate may be metal contacts. As shown in Fig.2, the sheet of material plate 500 may have an edge part 520 for locating and conveying the sheet of material plate 500. For facilitating the transmission of the work pieces 510, the work pieces 510 made of the sheet of material plate 500 initially are connected to each other by the edge part 520. The edge part 520 of the sheet of material plate 500 is cut off at last, so as to separate the work pieces 510 from each other in use.

In an embodiment, as shown in Figs.1 and 2, the row of tooth-like features 412 are identical with each other in size and shape, so that the row of work pieces 510 made of the sheet of material plate 500 are identical with each other in size and shape. But the present invention is not limited to this, the row of tooth-like features may be different from each other in size and shape, so that the row of work pieces made of the sheet of material plate are different from each other in size and shape.

As shown in Figs.1 and 2, the fixation device 400 may further comprise a force exerting mechanism 420, which is configured to exert a pressing force on the pressing plate 410, so as to press the sheet of material plate 500 positioned on the support table 300 with the pressing plate 410.

In an embodiment, as shown in Figs.1 and 2, the force exerting mechanism 420 mainly comprises a first linking plate 421, a second linking plate 422, a third linking plate 423 and a handle 424. The first linking plate 421 is fixed on a stationary base 430 and has a first end and a second end. The second linking plate 422 has a first corner, a second corner and a third corner. The first corner of the second linking plate 422 is pivotally connected to the first end of the first linking plate 421. The third linking plate 423 has a first end and a second end, the first end of the third linking plate 423 is pivotally connected to the second end of the first linking plate 421. One bottom side of the handle 424 is pivotally connected to the second corner of the second linking plate 422, and the other bottom side of the handle 424 is pivotally connected to the second end of the third linking plate 423. The pressing plate 410 is fixedly connected to the third corner of the second linking plate 422, and the pressing force may be exerted to the pressing plate 410 by rotating the handle 424.

In the illustrated embodiment, the force exerting mechanism 420 comprises a parallel quadrilateral transmission mechanism provided with pivotal joints. But the present invention is not limited to this, the force exerting mechanism may comprise an air cylinder or a hydraulic cylinder, and a piston rod of the air cylinder or the hydraulic cylinder may directly exert the pressing force on the pressing plate.

Referring to Figs.1 and 2, the force exerting mechanism 420 is configured to be switched between a locking state (shown in Fig.1) where the sheet of material plate 500 is pressed and an unlocking state (shown in Fig.2) where the sheet of material plate 500 is released. As shown in Figs. 1 and 2, when the force exerting mechanism 420 is switched to the locking state (shown in Fig.1), the second linking plate 422 and the third linking plate 423 of the force exerting mechanism 420 are engaged to each other by friction, so as to keep the force exerting mechanism 420 in the locking state. Furthermore, when the force exerting mechanism 420 is switched to the locking state (shown in Fig.1), the handle 424 is rotated to a horizontal position (shown in Fig.1) substantially parallel to the pressing plate 410.

In an embodiment of the present invention, as shown in Figs.1 and 2, the pressing plate 410 comprises a plate body 411 with a connection rod 413 provided thereon, the connection rod 413 has a threaded end. A connection member 4221 is provided on the third corner of the second linking plate 422 and formed with a through hole. The threaded end of the connection rod 413 passes through the through hole of the connection member 4221 and is locked on the connection member 4221 by two nuts on screwed at both sides of the connection member 4221.

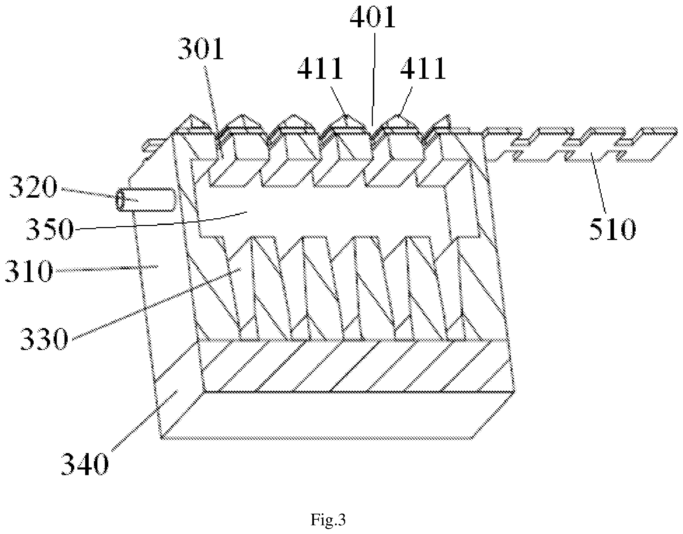

Fig.3 is a cross section view of the support table 300 and the fixation device 400 of the cutting system of Fig.1, in which the fixation device 400 is in the locking state where the sheet of material plate 500 is pressed.

As shown in Figs.1-3, in an embodiment, the support table 300 comprises a body 310 with a chamber 350 formed therein. A row of material dropping slots 301, corresponding to the row of tooth slots 401 of the pressing plate 410, are formed in the top wall of the chamber 350. Through the row of material dropping slots 301 in the top wall of the chamber 350, waste material cut from the sheet of material plate 500 falls into the chamber 350, and smoke and dust produced during cutting the sheet of material plate 500 enters into the chamber 350.

As shown in Fig.3, the cutting system further comprises a vacuum sucker with a vacuum suction pipe 320 extending into the chamber 350 from the side wall of the chamber 350, so as to sucking the smoke and dust out of the chamber 350.

Referring to Fig.3 again, a row of material collecting slots 330, corresponding to the row of material dropping slots 301, are formed in the bottom wall of the chamber 350. The waste material falling into the chamber 350 through the material dropping slots 301 is collected in the material collecting slots 330. In an embodiment, the material collecting slot 330 exhibits a trumpet shape with a larger opening facing the material dropping slot 301 and a smaller opening opposite to the larger opening.

Referring to Fig.3 again, in an embodiment, the support table 300 further comprises a bottom cover 340 provided on the bottom of the body 310 of the support table 300. The waste material collected in the material collecting slots 330 is discharged through the smaller openings of the material collecting slots 330 after the bottom cover 340 is opened.

In an embodiment, as shown in Fig.1, the moving mechanism 100 may comprise a multi-freedom robot, for example, a robot with four, five or six freedoms. The laser cutter 200 may be mounted on an end arm of the multi-freedom robot and located above the top surface of the support table 300.

It should be appreciated for those skilled in this art that the above embodiments are intended to be illustrated, and not restrictive. For example, many modifications may be made to the above embodiments by those skilled in this art.

## Claims

1. A cutting system, comprising:
a moving mechanism (100);
a laser cutter (200) mounted on the moving mechanism (100);
a support table (300) configured to support a sheet of material plate (500) to be cut thereon; and
a fixation device (400) configured to fix the sheet of material plate (500) to be cut on the support table (300), **characterized in that**
the fixation device (400) comprises a pressing plate (410) having a row of tooth-like features (412) with a tooth slot (401) defined between adjacent tooth-like features (412), and
wherein, during cutting the sheet of material plate (500) with the laser cutter (200), the row of tooth-like features (412) press the sheet of material plate (500) on the support table (300), and the moving mechanism (100) drives a laser head of the laser cutter (200) to move along edges of the tooth slots (401) based on a preset control program to cut a row of work pieces (510), corresponding to the row of tooth-like features (412), out of the sheet of material plate (500) by a single cutting process.

2. The cutting system according to claim 1,
wherein the row of tooth-like features (412) are identical with each other in size and shape, so that the row of work pieces (510) made of the sheet of material plate (500) are identical with each other in size and shape.

3. The cutting system according to claim 1,
wherein the row of tooth-like features (412) are different from each other in size and shape, so that the row of work pieces (510) made of the sheet of material plate (500) are different from each other in size and shape.

4. The cutting system according to one of claims 1 to 3, wherein the fixation device (400) further comprises a force exerting mechanism (420) configured to exert a pressing force on the pressing plate (410), to press the sheet of material plate (500) on the support table (300) with the pressing plate (410).

5. The cutting system according to claim 4, wherein the force exerting mechanism (420) comprising:
a first linking plate (421) fixed on a stationary base (430) and having a first end and a second end;
a second linking plate (422) having a first corner, a second corner and a third corner, the first corner of which is pivotally connected to the first end of the first linking plate (421);
a third linking plate (423) having a first end and a second end, the first end of which is pivotally connected to the second end of the first linking plate (421); and
a handle (424), one bottom side of which is pivotally connected to the second corner of the second linking plate (422), and the other bottom side of which is pivotally connected to the second end of the third linking plate (423),
wherein the pressing plate (410) is fixedly connected to the third corner of the second linking plate (422), and the pressing force is exerted to the pressing plate (410) by rotating the handle (424).

6. The cutting system according to one of claims 4 or 5,
wherein the force exerting mechanism (420) is configured to be switched between a locking state where the sheet of material plate (500) is pressed and an unlocking state where the sheet of material plate (500) is released.

7. The cutting system according to claim 6, wherein
when the force exerting mechanism (420) is switched to the locking state, the second linking plate (422) and the third linking plate (423) of the force exerting mechanism (420) are engaged with each other by friction, so as to keep the force exerting mechanism (420) in the locking state.

8. The cutting system according to claim 7, wherein when the force exerting mechanism (420) is switched to the locking state, the handle (424) is rotated to and held at a horizontal position substantially parallel to the pressing plate (410).

9. The cutting system according to one of claims 5 to 8,
wherein the pressing plate (410) comprises a plate body (411) with a connection rod (413) provided thereon, the connection rod (413) having a threaded end;
wherein a connection member (4221) is provided on the third corner of the second linking plate (422) and formed with a through hole; and
wherein the threaded end of the connection rod (413) passes through the through hole of the connection member (4221) and is locked on the connection member (4221) by two nuts screwed on both sides of the connection member (4221).

10. The cutting system according to claim one of claims 4 to 9,
wherein the force exerting mechanism (420) comprises an air cylinder or a hydraulic cylinder, a piston rod of the air cylinder or the hydraulic cylinder directly exerts the pressing force on the pressing plate (410).

11. The cutting system according to one of claims 1 to 10,
wherein the support table (300) comprises a body (310) with a chamber (350) formed therein;
wherein a row of material dropping slots (301), corresponding to the row of tooth slots (401) of the pressing plate (410), are formed in the top wall of the chamber (350); and
wherein through the row of material dropping slots (301) in the top wall of the chamber (350), waste material cut from the sheet of material plate (500) falls into the chamber (350), and smoke and dust produced during cutting the sheet of material plate (500) enters into the chamber (350).

12. The cutting system according to claim 11, further comprises a vacuum sucker with a vacuum suction pipe extending into the chamber (350) from the side wall of the chamber (350), so as to sucking the smoke and dust out of the chamber (350).

13. The cutting system according to one of claims 10 or 11,
wherein a row of material collecting slots (330), corresponding to the row of material dropping slots (301), are formed in the bottom wall of the chamber (350); and
wherein the waste material falling into the chamber (350) through the material dropping slots (301) is collected in the material collecting slots (330).

14. The cutting system according to claim 11,
wherein the material collecting slot (330) exhibits a trumpet shape with a larger opening facing the material dropping slot (301) and a smaller opening opposite to the larger opening.

15. The cutting system according to claim 14,
wherein the support table (300) further comprises a bottom cover (340) provided on the bottom of the body (310) of the support table (300); and
wherein the waste material collected in the material collecting slots (330) is discharged through the smaller openings of the material collecting slots (330) after the bottom cover (340) is opened.

16. The cutting system according to one of claims 1 to 15,
wherein the moving mechanism (100) comprises a multi-freedom robot, and the laser cutter (200) is mounted on an end arm of the multi-freedom robot.

## Patentansprüche

1. Schneidsystem, das umfasst:
einen Bewegungs-Mechanismus (100);
eine Laser-Schneidvorrichtung (200), die an dem Bewegungs-Mechanismus (100) angebracht ist;
einen Auflagetisch (300), der so ausgeführt ist, dass er eine darauf zu schneidende Werkstoffplatte (500) trägt; und
eine Fixiervorrichtung (400), die so ausgeführt ist, dass sie die zu schneidende Werkstoffplatte (500) auf dem Auflagetisch (300) fixiert, **dadurch gekennzeichnet, dass**
die Fixiervorrichtung (400) eine Druckplatte (410) umfasst, die eine Reihe zahnartiger Strukturen (412) mit einem zwischen benachbarten zahnartigen Strukturen (412) ausgebildeten Zahn-Schlitz (401) aufweist, und
wobei beim Schneiden der Werkstoffplatte (500) mit der Laser-Schneidvorrichtung (200) die Reihe zahnartiger Strukturen (412) die Werkstoffplatte (500) auf den Auflagetisch (300) drückt, und der Bewegungs-Mechanismus (100) einen Laserkopf der Laser-Schneidvorrichtung (200) auf Basis eines voreingestellten Steuerungs-Programms so antreibt, dass er sich an Kanten der Zahn-Schlitze (401) entlang bewegt und eine Reihe von Werkstücken (510) entsprechend der Reihe zahnartiger Strukturen (412) mit einem einzelnen Schneidvorgang aus der Werkstoffplatte (500) herausschneidet.

2. Schneidsystem nach Anspruch 1,
wobei die zahnartigen Strukturen (412) der Reihe in Größe und Form identisch miteinander sind, so dass die aus der Werkstoffplatte (500) hergestellten Werkstücke (510) der Reihe in Größe und Form identisch miteinander sind.

3. Schneidsystem nach Anspruch 1,
wobei die zahnartigen Strukturen (412) der Reihe in Größe und Form voneinander verschieden sind, so dass die aus der Werkstoffplatte (500) hergestellten Werkstücke (510) der Reihe in Größe und Form voneinander verschieden sind.

4. Schneidsystem nach einem der Ansprüche 1 bis 3, wobei die Fixiervorrichtung (400) des Weiteren einen Kraftausübungs-Mechanismus (420) umfasst, der so ausgeführt ist, dass er eine Druckkraft auf die Druckplatte (410) ausübt, um die Werkstoffplatte (500) auf dem Auflagetisch (300) mit der Druckplatte (410) zu drücken.

5. Schneidsystem nach Anspruch 4, wobei der Kraftausübungs-Mechanismus (420) umfasst:
eine erste Verbindungsplatte (421), die auf einer stationären Basis (430) fixiert ist und ein erstes Ende sowie ein zweites Ende hat;
eine zweite Verbindungsplatte (422), die eine erste Ecke, eine zweite Ecke und eine dritte Ecke hat, wobei ihre erste Ecke schwenkbar mit dem ersten Ende der ersten Verbindungsplatte (421) verbunden ist;
eine dritte Verbindungsplatte (423), die ein erstes Ende sowie ein zweites Ende hat und deren erstes Ende schwenkbar mit dem zweiten Ende der ersten Verbindungsplatte (421) verbunden ist;
einen Griff (424), dessen eine Unterseite schwenkbar mit der zweiten Ecke der zweiten Verbindungsplatte (422) verbunden ist und dessen andere Unterseite schwenkbar mit dem zweiten Ende der dritten Verbindungsplatte (423) verbunden ist,
wobei die Druckplatte (410) fest mit der dritten Ecke der zweiten Verbindungsplatte (422) verbunden ist und die Druckkraft durch Drehen des Griffs (424) auf die Druckplatte (410) ausgeübt wird.

6. Schneidsystem nach einem der Ansprüche 4 oder 5,
wobei der Kraftausübungs-Mechanismus (420) so ausgeführt ist, dass er zwischen einem arretierten Zustand, in dem die Werkstoffplatte (500) gedrückt wird, und einem entarretierten Zustand umgestellt wird, in dem die Werkstoffplatte (500) freigegeben wird.

7. Schneidsystem nach Anspruch 6, wobei
wenn der Kraftausübungs-Mechanismus (420) auf den arretierten Zustand eingestellt wird, die zweite Verbindungsplatte (422) und die dritte Verbindungsplatte (423) des Kraftausübungs-Mechanismus (420) durch Reibung miteinander in Eingriff gebracht werden, um den Kraftausübungs-Mechanismus (420) in dem arretierten Zustand zu halten.

8. Schneidsystem nach Anspruch 7, wobei, wenn der Kraftausübungs-Mechanismus (420) auf den arretierten Zustand eingestellt wird, der Griff (424) in eine horizontale Position im Wesentlichen parallel zu der Druckplatte (410) gedreht und darin gehalten wird.

9. Schneidsystem nach einem der Ansprüche 5 bis 8,
wobei die Druckplatte (410) einen Plattenkörper (411) mit einer daran vorhandenen Verbindungsstange (413) umfasst und die Verbindungsstange (413) ein mit Gewinde versehenes Ende aufweist;
ein Verbindungselement (4221) an der dritten Ecke der zweiten Verbindungsplatte (422) vorhanden und mit einem Durchgangsloch versehen ist; und
das mit Gewinde versehene Ende der Verbindungsstange (413) durch das Durchgangsloch des Verbindungselementes (4221) hindurchtritt und an dem Verbindungselement (4221) mittels zweier Muttern arretiert wird, die an beiden Seiten des Verbindungselementes (4221) aufgeschraubt sind.

10. Schneidsystem nach einem der Ansprüche 4 bis 9,
wobei der Kraftausübungs-Mechanismus (420) einen Druckluftzylinder oder einen Hydraulikzylinder umfasst, und eine Kolbenstange des Druckluftzylinders oder des Hydraulikzylinders die Druckkraft direkt auf die Druckplatte (410) ausübt.

11. Schneidsystem nach einem der Ansprüche 1 bis 10,
wobei der Auflagetisch (300) einen Körper (310) mit einer darin ausgebildeten Kammer (350) umfasst;
eine Reihe von Material-Fallschlitzen (301), die der Reihe von Zahn-Schlitzen (401) der Druckplatte (410) entsprechen, in der oberen Wand der Kammer (350) ausgebildet sind; und
durch die Reihe von Material-Fallschlitzen (301) in der oberen Wand der Kammer (350) von der Werkstoffplatte (500) abgeschnittenes Abfallmaterial in die Kammer (350) hinein fällt und beim Schneiden der Werkstoffplatte (500) erzeugter Rauch und Staub in die Kammer (350) eintreten.

12. Schneidsystem nach Anspruch 11, das des Weiteren eine Vakuum-Saugvorrichtung mit einem Vakuum-Saugrohr umfasst, das sich von der Seitenwand der Kammer (350) in die Kammer (350) hinein erstreckt, um den Rauch und Staub aus der Kammer (350) abzusaugen.

13. Schneidsystem nach einem der Ansprüche 10 oder 11,
wobei eine Reihe von Material-Auffangschlitzen (330), die der Reihe von Material-Fallschlitzen (301) entsprechen, in der unteren Wand der Kammer (350) ausgebildet sind; und
das Abfallmaterial, das durch die Material-Fallschlitze (301) in die Kammer (350) hinein fällt, in den Material-Auffangschlitzen (330) aufgefangen wird.

14. Schneidsystem nach Anspruch 11,
wobei der Material-Auffangschlitz (330) eine Trompetenform mit einer größeren Öffnung, die dem Material-Fallschlitz (301) zugewandt ist, und einer kleineren Öffnung aufweist, die der größeren Öffnung gegenüberliegt.

15. Schneidsystem nach Anspruch 14,
wobei der Auflagetisch (300) des Weiteren eine untere Abdeckung (340) umfasst, die an der Unterseite des Körpers (310) des Auflagetischs (300) vorhanden ist; und
das in den Material-Auffangschlitzen (330) aufgefangene Abfallmaterial durch die kleineren Öffnungen der Material-Auffangschlitze (330) hindurch entleert wird, nachdem die untere Abdeckung (340) geöffnet ist.

16. Schneidsystem nach einem der Ansprüche 1 bis 15,
wobei der Bewegungs-Mechanismus (100) einen Roboter mit mehreren Freiheitsgraden umfasst und die Laser-Schneidvorrichtung (200) an einem End-Arm des Roboters mit mehreren Freiheitsgraden montiert ist.

## Revendications

1. Système de coupe, comprenant :
un mécanisme de déplacement (100) ;
un découpeur laser (200) monté sur le mécanisme de déplacement (100) ;
une table de support (300) configurée pour supporter une feuille de plaque de matériau (500) qui doit y être découpée ; et
un dispositif de fixation (400) configuré pour fixer la feuille de plaque de matériau (500) qui doit être découpée sur la table de support (300),
**caractérisé en ce que**
le dispositif de fixation (400) comprend une plaque de compression (410) comportant une rangée d'éléments en forme de dent (412) avec une fente de dent (401) définie entre les éléments en forme de dent adjacents (412), et
dans lequel, durant la découpe de la feuille de plaque de matériau (500) avec le découpeur laser (200), la rangée d'éléments en forme de dent (412) comprime la feuille de plaque de matériau (500) sur la table de support (300), et le mécanisme de déplacement (100) entraîne une tête laser du découpeur laser (200) en la déplaçant le long de bords des fentes de dent (401) sur base d'un programme de contrôle préétabli pour découper une rangée de pièces (510), correspondant à la rangée d'éléments en forme de dent (412), dans la feuille de plaque de matériau (500) par un seul processus de coupe.

2. Système de coupe selon la revendication 1,
dans lequel les éléments de la rangée d'éléments en forme de dent (412) sont identiques entre eux en taille et en forme, de telle sorte que les pièces de la rangée de pièces (510) constituées à partir de la feuille de plaque de matériau (500) sont identiques entre elles en taille et en forme.

3. Système de coupe selon la revendication 1,
dans lequel les éléments de la rangée d'éléments en forme de dent (412) sont différents entre eux en taille et en forme, de telle sorte que les pièces de la rangée de pièces (510) constituées à partir de la feuille de plaque de matériau (500) sont différentes entre elles en taille et en forme.

4. Système de coupe selon l'une des revendications 1 à 3, dans lequel le dispositif de fixation (400) comprend en outre un mécanisme d'application de force (420) configuré pour exercer une force de compression sur la plaque de compression (410), pour compresser la feuille de plaque de matériau (500) sur la table de support (300) avec la plaque de compression (410).

5. Système de coupe selon la revendication 4, dans lequel le mécanisme d'application de force (420) comprend :
une première plaque de liaison (421) fixée sur une base stationnaire (430) et comportant une première extrémité et une deuxième extrémité ;
une deuxième plaque de liaison (422) comportant un premier coin, un deuxième coin et un troisième coin, ledit premier coin étant connecté de manière pivotante à la première extrémité de la première plaque de liaison (421) ;
une troisième plaque de liaison (423) comportant une première extrémité et une deuxième extrémité, ladite première extrémité étant connectée de manière pivotante à la deuxième extrémité de la première plaque de liaison (421) ; et
une poignée (424), dont un côté inférieur est connecté de manière pivotante au deuxième coin de la deuxième plaque de liaison (422), et dont l'autre côté inférieur est connecté de manière pivotante à la deuxième extrémité de la troisième plaque de liaison (423),
dans lequel la plaque de compression (410) est connectée de manière fixe au troisième coin de la deuxième plaque de liaison (422), et la force de compression est appliquée sur la plaque de compression (410) en pivotant la poignée (424).

6. Système de coupe selon l'une des revendications 4 et 5,
dans lequel le mécanisme d'application de force (420) est configuré pour être commuté entre un état de verrouillage où la feuille de plaque de matériau (500) est compressée et un état de déverrouillage où la feuille de plaque de matériau (500) est libérée.

7. Système de coupe selon la revendication 6, dans lequel
quand le mécanisme d'application de force (420) est commuté à l'état de verrouillage, la deuxième plaque de liaison (422) et la troisième plaque de liaison (423) du mécanisme d'application de force (420) sont engagées entre elles par friction, de manière à maintenir le mécanisme d'application de force (420) dans l'état de verrouillage.

8. Système de coupe selon la revendication 7, dans lequel, quand le mécanisme d'application de force (420) est commuté à l'état de verrouillage, la poignée (424) est pivotée et maintenue dans une position horizontale substantiellement parallèle à la plaque de compression (410) .

9. Système de coupe selon l'une des revendications 5 à 8,
dans lequel la plaque de compression (410) comprend un corps de plaque (411) sur lequel est pourvue une tige de connexion (413), la tige de connexion (413) comportant une extrémité filetée ;
dans lequel un élément de connexion (4221) est pourvu sur le troisième coin de la deuxième plaque de liaison (422) et formé avec un trou traversant ; et
dans lequel l'extrémité filetée de la tige de connexion (413) passe par le trou traversant de l'élément de connexion (4221) et est verrouillée sur l'élément de connexion (4221) par deux écrous vissés des deux côtés de l'élément de connexion (4221).

10. Système de coupe selon l'une des revendications 4 à 9,
dans lequel le mécanisme d'application de force (420) comprend un vérin pneumatique ou un vérin hydraulique, une tige de piston du vérin pneumatique ou du vérin hydraulique appliquant directement la force de compression sur la plaque de compression (410).

11. Système de coupe selon l'une des revendications 1 à 10,
dans lequel la table de support (300) comprend un corps (310) dans lequel est formée une chambre (350) ;
dans lequel une rangée de fentes de chute de matériau (301), correspondant à la rangée de fentes de dent (401) de la plaque de compression (410), est formée dans la paroi de plafond de la chambre (350) ; et
dans lequel, à travers la rangée de fentes de chute de matériau (301) dans la paroi de plafond de la chambre (350), le matériau résiduel découpé dans la feuille de plaque de matériau (500) tombe dans la chambre (350), et la fumée et la poussière produites durant la découpe de la feuille de plaque de matériau (500) entrent dans la chambre (350) .

12. Système de coupe selon la revendication 11, comprenant en outre un aspirateur avec un tube d'aspiration qui s'étend dans la chambre (350) depuis la paroi latérale de la chambre (350), de manière à aspirer la fumée et la poussière de la chambre (350).

13. Système de coupe selon l'une des revendications 10 et 11,
dans lequel une rangée de fentes de collecte de matériau (330), correspondant à la rangée de fentes de chute de matériau (301), est formée dans la paroi de fond de la chambre (350) ; et
dans lequel le matériau résiduel qui tombe dans la chambre (350) à travers les fentes de chute de matériau (301) est collecté dans les fentes de collecte de matériau (330) .

14. Système de coupe selon la revendication 11,
dans lequel la fente de collecte de matériau (330) présente une forme de trompette, avec une plus grande ouverture faisant face à la fente de chute de matériau (301) et une plus petite ouverture opposée à la plus grande ouverture.

15. Système de coupe selon la revendication 14,
dans lequel la table de support (300) comprend en outre un couvercle de fond (340) pourvu sur le fond du corps (310) de la table de support (300) ; et
dans lequel le matériau résiduel collecté dans les fentes de collecte de matériau (330) est déchargé à travers les plus petites ouvertures des fentes de collecte de matériau (330) après ouverture du couvercle de fond (340).

16. Système de coupe selon l'une des revendications 1 à 15,
dans lequel le mécanisme de déplacement (100) comprend un robot à multiples degrés de liberté, et le découpeur laser (200) est monté sur un bras d'extrémité du robot à multiples degrés de liberté.
